Europäisches Patentamt

European Patent Office

Office européen des brevets

(19)

(11) **EP 1 408 432 A1**

(12) **EUROPEAN PATENT APPLICATION**

(43) Date of publication:
**14.04.2004 Bulletin 2004/16**

(51) Int Cl.$^7$: **G06F 17/60**

(21) Application number: **02022376.4**

(22) Date of filing: **09.10.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Polaris Securities Co., Ltd.
Taipei City (TW)**

(72) Inventors:
• **Tao, Hung Te
Taipei (TW)**
• **Tuan, Wei-Han
Kuei-San Hsiang, Taoyuan Hsien (TW)**

• **Yang, Ding Goe
Taipei (TW)**
• **Hong, Ying-Zhe
Sanchung City, Taipei Hsien (TW)**

(74) Representative: **Benedum, Ulrich Max, Dr.
Haseltine Lake Partners
Motorama Haus 502
Rosenheimer Strasse 30
81669 München (DE)**

Remarks:
Amended claims in accordance with Rule 86 (2)
EPC.

(54) **System and method for option commodity recommendation**

(57) A system for option commodity recommendation. The system includes a network interface, a processing unit, and an option trade unit. The processing unit selects a plurality of candidate option commodities from the option trade unit according to the investment direction and the predicted stock trend received via the network interface, and calculates a possible return for each candidate option commodity under a win probability. The processing unit selects the candidate option commodity with the highest return as a recommendation option commodity under the win probability.

FIG. 1

EP 1 408 432 A1

**Description**

**BACKGROUND OF THE INVENTION**

**Field of the Invention**

The present invention relates to a system and method for option commodity recommendation, and particularly to a system and method for option commodity recommendation that automatically recommends appropriate option commodities according to the predicted stock trend and investor purse.

**Description of the Related Art**

With the popularization of financial self- management, various investment tools and commodities, such as funds, debentures, stocks, and future commodities are commonly used by investors to manage finances. In the current trend, option commodities such as stock options have become a popular investment commodity.

Two types of optioning are generally available. A put option contract gives the holder the right, but not the obligation, to sell the underlying security at a specified price on or before a fixed date and time, and a call option contract gives the holder the right, but not the obligation, to buy the underlying security at a specified price on or before a fixed date and time.

Call options increase in value as the price of the stock rises. If the stock rises above the strike price of the option, the investor can buy the stock at that price. Put options increase in value as the price of the stock drops, helping to offset the losses in the stock. If the stock falls below the strike price of the option, the investor can sell the stock at that price, thereby limiting the losses of the portfolio to a predetermined amount. That is to say call options of a product are purchased if the price of the product is expected to rise, and put options of the:product are purchased if the price of the product is expected to drop.

However, various weighted index options are provided in option trading. Each option has a price or premium, and can be recognized by respective expiration month, strike price, and call or put options. Since the theory of option is complicated and there is no effective mechanism to disclose option information, it is difficult to choose appropriate options by which to invest, thereby creating a bottleneck in the development of option trade market.

**SUMMARY OF THE INVENTION**

It is therefore an object of the present invention to provide a system and method for option commodity recommendation that automatically recommends appropriate option commodities according to the predicted stock trend and investor purse.

To achieve the above objects, the present invention provides a system and method for option commodity recommendation. According to one embodiment of the invention, the system includes a network interface, a processing unit, and an option trade unit. An investment purse, an investment direction, and a predicted stock trend are received by the network interface. The option trade unit has a plurality of option commodities, and each option commodity has a price and a strike price.

The processing unit selects a plurality of candidate option commodities from the option commodities in the option trade unit according to the investment direction and the predicted stock trend received via the network interface. For each candidate option commodity, the processing unit calculates an investment quality according to the investment purse and the price thereof, calculates a profit index under a win probability according to the strike price thereof, calculates a predicted net profit according to the profit index and the investment quality, and calculates a possible return for the candidate option commodity under the win probability according to the investment purse, the predicted net profit, and a fixed cost.

The processing unit selects the candidate option commodity with the highest return as a recommendation option commodity under the win probability.

According to another embodiment of the invention, a method for option commodity recommendation is provided.

First, an investment purse, an investment direction, and a predicted stock trend input by investors are received via a network interface. Then, a plurality of candidate option commodities is selected according to the investment direction and the predicted stock trend, wherein each candidate option commodity has a price and a strike price.

Then, for each candidate option commodity, an investment quality is calculated according to the investment purse and the price thereof, a profit index under a win probability is calculated according to the strike price thereof, a predicted net profit is calculated according to the profit index and the investment quality, and a return of the candidate option commodity under the win probability is calculated according to the investment purse, the predicted net profit, and a fixed cost.

Finally, the candidate option commodity with the highest return is selected as a recommendation option commodity under the win probability.

The method to calculate the profit index first acquires an expected index corresponding to the win probability, and calculates the profit index according to the strike price thereof and the expected index. The expected index can be obtained by inputting the strike price, win probability, current index, risk-free interest rate, maturity, volatility, and fixed interest rate into an index distribution model.

**BRIEF DESCRIPTION OF THE DRAWINGS**

The aforementioned objects, features and advantages of this invention will become apparent by referring to the following detailed description of the preferred embodiment with reference to the accompanying drawings, wherein:

Fig. 1 is a schematic diagram showing the architecture of the system for option commodity recommendation according to the embodiment of the present invention;
Fig. 2 shows an example of a network interface;
Fig. 3 is a schematic diagram showing the Fischer Black/Myron Scholes (B/S) pricing model;
Fig. 4 is a flowchart illustrating the operation of the method for option commodity recommendation according to the embodiment of the present invention; and
Fig. 5 shows the network interface with recommendation option commodities.

**DETAILED DESCRIPTION OF THE INVENTION**

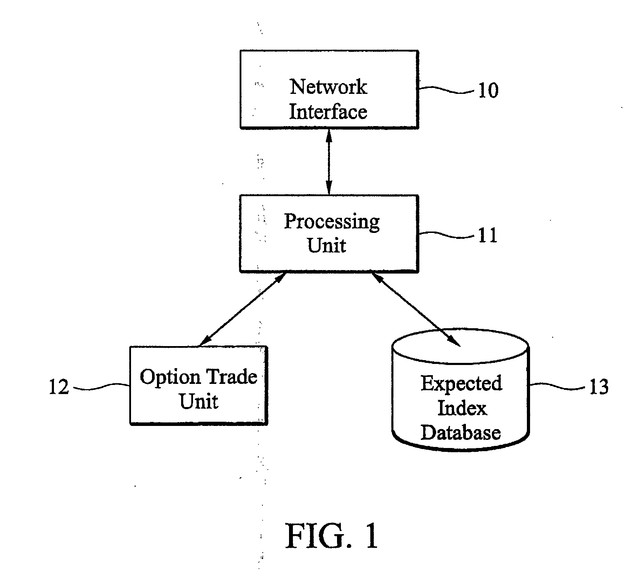

Fig. 1 is a schematic diagram showing the architecture of the system for option commodity recommendation according to the embodiment of the present invention. According to the embodiment of the invention, the system includes a network interface 10, a processing unit 11, an option trade unit 12, and an expected index database 13.

The option trade unit 12 may provide real-time information, such as detailed content, price, strike price, and other option commodities. The network interface 10 receives an investment purse, an investment direction, and a predicted stock trend input by users, and displays recommendation option commodities. It should be noted that users can input the investment purse, investment direction, and predicted stock trend and acquire the information of recommendation option commodities via the network interface 10, however, the present invention is not limited thereto, and the same process can be achieved by using a computer interface of a host without network.

The investment purse is the amount prepared by the user to invest. The investment direction includes the investment target, such as index options, and the term of the investment target, such as near monthly option or far monthly option. The predicted stock trend may be drop, rise, or no comment.

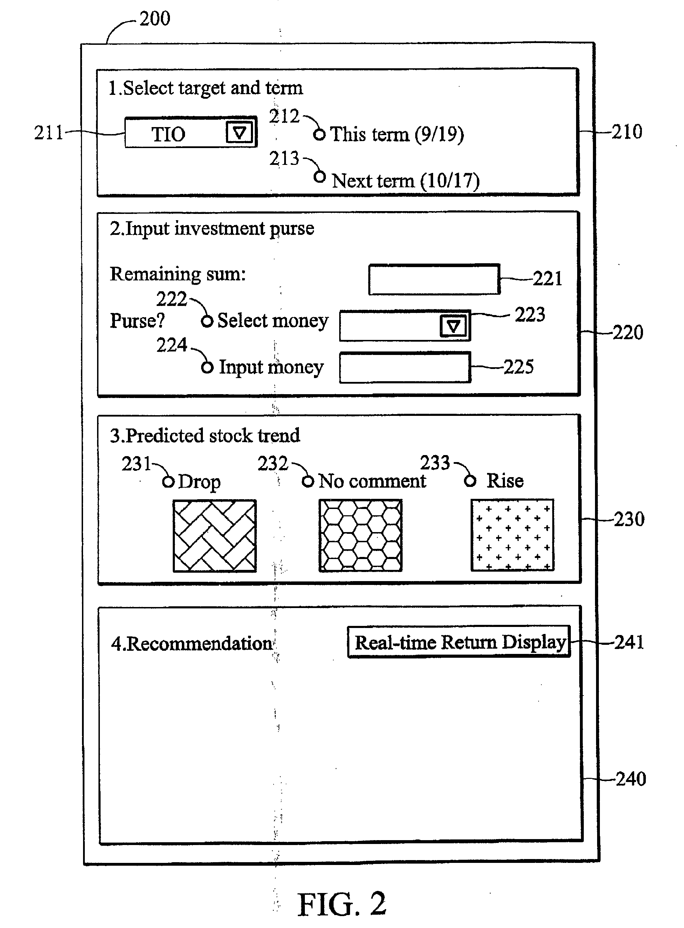

Fig. 2 shows an example of a network interface 200. The network interface 200 includes four regions: a target region 210, a purse region 220, an opinion region 230, and a recommendation region 240.

Users can select an investment target, such as Taiwan index options (TIO) in the pull-down menu 211, and a term (button 212 for near monthly and button 213 for far monthly) in the target region 210 . Users can select (via button 222 and pull-down menu 223) or input (via button 224 and region 225) the investment purse in the purse region 220. Note that the remaining sum of a user's account can be displayed in the window 221 if a financial institution is connected to the system.

In addition, users can input the predicted stock trend by selecting button 231 (drop), 232 (no comment) , or 233 (rise). It should be noted that put options are expected to purchase if button 231 is selected, call options are expected to purchase if button 233 is selected, and put and call options are expected to purchase if button 232 is selected. After the investment purse, investment direction, and predicted stock trend are input, users can select button 241 to start the process to find recommendation option commodities, and the recommendation option commodities and related information, such as return will be displayed in the recommendation region 240.

The expected index database 13 stores the expected indices corresponding to respective win probability under a fixed index level. The method to calculate expected indices is discussed as follows.

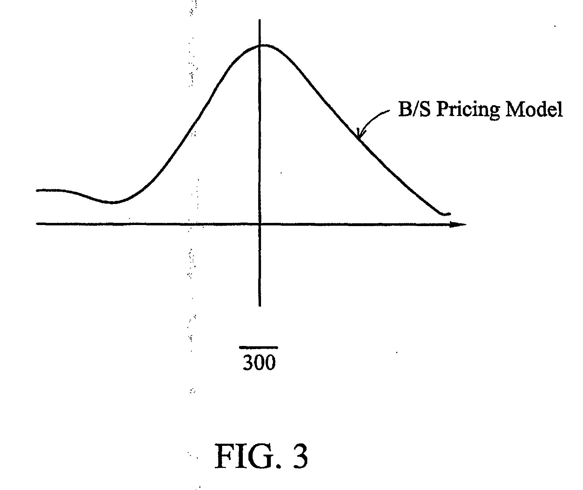

The expected index can be obtained by inputting the strike price, win probability, current index, risk-free interest rate, maturity, volatility, and fixed interest rate into an index distribution model. In the embodiment, the index distribution model may be the Fischer Black/Myron Scholes (B/S) pricing model, as shown in Fig. 3.

The formula of the B/S pricing model is,

$$C = S \times N(d_1) - K \times e^{-r \times T} \times N(d_2) \text{,}$$

where

$$d_1 = \frac{\ln\left(\dfrac{S}{K}\right) + r \times T}{\sigma \times \sqrt{T}} + \left(\frac{1}{2}\right) \times \sigma \times \sqrt{T} \text{ ; } d_2 = d_1 - \sigma \times \sqrt{T} \text{,}$$

where C represents the value of a call; S represents the current price of the investment target; K represents the strike price; r represents the instantaneous risk-free interest rate; T represents the maturity (cycle); σ represents the instantaneous standard deviation of target return; ln(.) represents nature logarithm; and N(.) represents the accumulated probability of standard normal distribution. Therefore, the expected indices corresponding to respective win probability can be calculated. It should be noted that, since the process to calculate the expected indices is familiar to those skilled in this area, details thereof are omitted here.

Since the weighted index changes between a fixed range (14%) in one trading day, the expected index corresponding to a weighted index may be calculated several times. Therefore, the expected indices corresponding to the weighted indices between the fixed range can be calculated and stored into the expected index database 13 in advance. The expected index corresponding to a win probability can be obtained by querying the expected index database 13 according to current weighted index and the win probability.

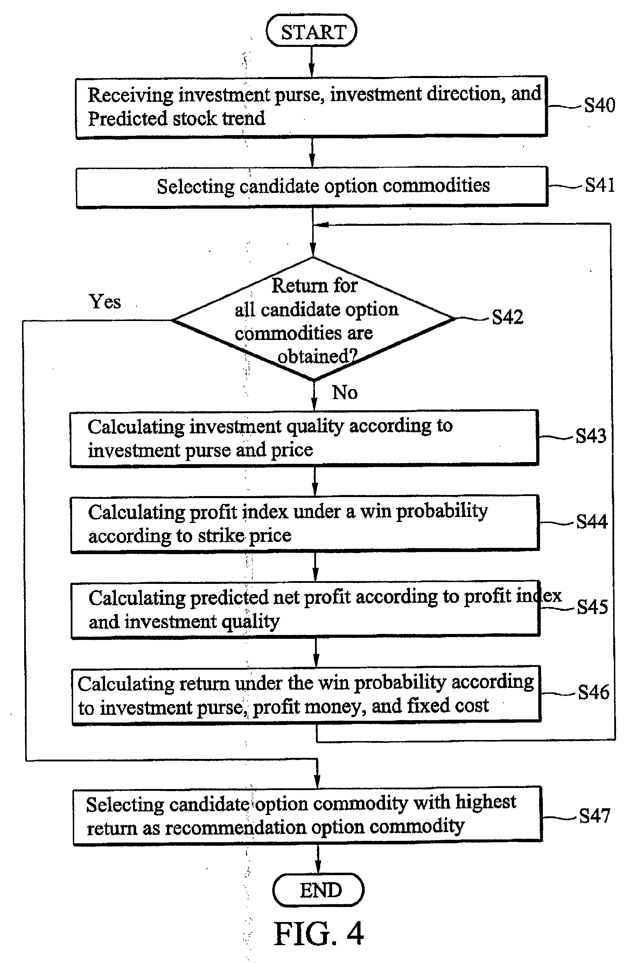

After the investment purse, investment direction, and predicted stock trend are received via the network interface 10, the processing unit 11 starts the related process to find recommendation option commodities. The process of finding recommendation option commodities by the processing unit 11 will is discussed referring to Fig. 4.

Fig. 4 is a flowchart illustrating the operation of the method for option commodity recommendation according to the embodiment of the present invention.

First, in step S40, an investment purse, an investment direction, and a predipted stock trend input by investors are received via a network interface. Then, in step S41, a plurality of candidate option commodities is selected according to the investment direction and the predicted stock trend, wherein each candidate option commodity has a price and a strike price.

Then, in step S42, the processing unit checks whether return of each candidate option commodity is calculated. If not (No in step S42), in step S43, an investment quality is calculated according to the investment purse and the price of the candidate option commodity, and in step S44, a profit index under a win probability is calculated according to the strike price thereof. Thereafter, in step S45, a predicted net profit is calculated according to the profit index and the investment quality, and in step S46, a return of the candidate option commodity under the win probability is calculated according to the investment purse, the predicted net profit, and a fixed cost. The fixed cost includes a trading cost of the investment quality to multiply the price of the candidate option commodity and a processing fee charged by the trading firm.

The method to calculate the profit index first acquires an expected index corresponding to the win probability, and calculates the profit index according to the strike price thereof and the expected index. The expected index can be obtained by inputting the strike price, win probability, current index, risk-free interest rate, maturity, volatility, and fixed interest rate into an index distribution model, such as the B/S pricing model.

Then, the flow returns to step S42, the processing unit checks whether return of each candidate option commodity is calculated. If yes (Yes in step S42), in step S47, the processing unit selects the candidate option commodity with the highest return as a recommendation option commodity under the win probability, and the recommendation option commodity and the return thereof can be displayed in the network interface.

In addition, the processing unit can calculate the returns under different win probabilities for each candidate option commodity, and select the candidate option commodities with the highest return under different win probabilities as recommendation option commodities. Further, the processing unit can further calculate the repayment ratio for each candidate option commodity, and the repayment ratio may also be displayed in the recommendation region of the network interface.

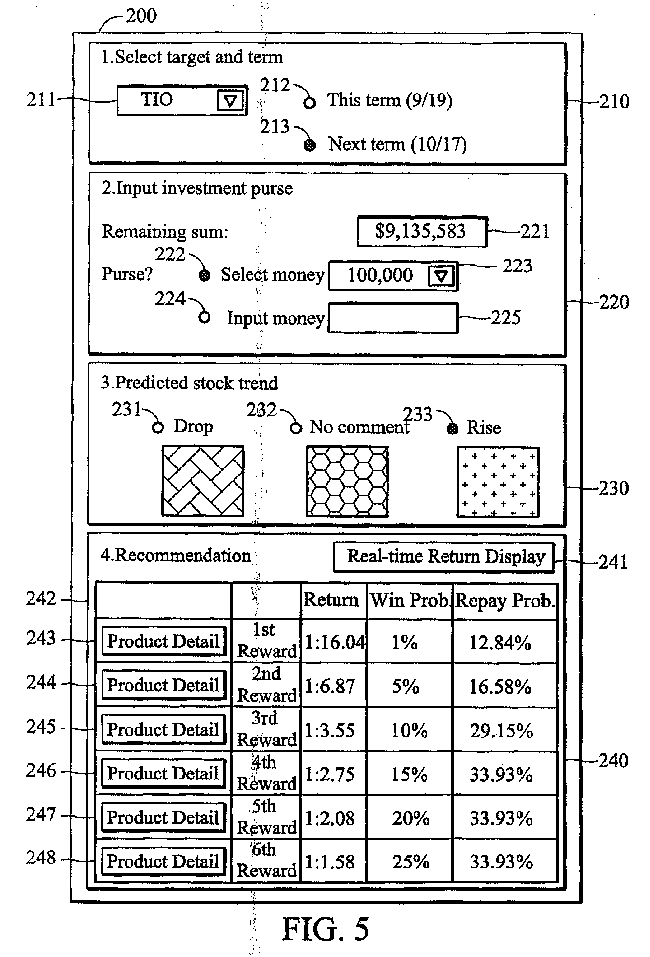

Fig. 5 shows the network interface with recommendation option commodities. After information (investment purse, investment direction, and predicted stock trend) is input, users can select button 241 in the recommendation region 240 to start the process of option commodity recommendation, and recommendation option commodities and corresponding return and repayment ratio under win probability (1%, 5%, 10%, 15%, 20%, and 25%) are displayed in the recommendation region 240, as shown in window 242.

Note that users can select buttons (243~248) to view product details of corresponding recommendation option commodities, and the product detail will be displayed in another window (not shown in Fig. 5). Since the prices of option commodities change dynamically, users can select button 241 for another process of option commodity recommendation after a predetermined time period, or the system can automatically perform another process of option commodity recommendation after a time interval. Further, the system may connect to a real-time option commodity trading system when the product detail button (243~248) is selected. Users can purchase corresponding recommendation option commodity online after appropriate identification.

As a result, using the system and method for option commodity recommendation according to the present invention, appropriate option commodities can be automatically recommended according to the predicted stock trend and investor purse.

Although the present invention has been described in its preferred embodiments, it is not intended to limit the invention to the precise embodiments disclosed herein. Those who are skilled in this technology can still make various alterations and modifications without departing from the scope and spirit of this invention. Therefore, the scope of the present invention shall be defined and protected by the following claims and their equivalents.

**Claims**

1. A system for option commodity recommendation, comprising:

   a network interface to receive an investment purse, an investment direction, and a predicted stock trend;
   an option trade unit having a plurality of option commodities, wherein each option commodity has a price and a strike price; and
   a processing unit to select a plurality of candidate option commodities from the option commodities in the option trade unit according to the investment direction and the predicted stock trend, calculate an investment quality according to the investment purse and the price of each candidate option commodity, calculate a profit index under a win probability according to the strike price thereof, calculate a predicted net profit according to the profit index and the investment quality, calculate a return thereof under the win probability according to the investment purse, the predicted net profit, and a fixed cost, and select the candidate option commodity with the highest return as a recommendation option commodity under the win probability.

2. The system as claimed in Claim 1 wherein the processing unit displays the recommendation option commodity in the network interface.

3. The system as claimed in Claim 1 wherein the method for calculating the profit index comprises the steps of:

   acquiring an expected index corresponding to the win probability; and
   calculating the profit index according to the strike price thereof and the expected index.

4. The system as claimed in Claim 3 wherein the expected index is obtained by inputting the strike price, the win probability, a current index, a risk-free interest rate, a maturity, a volatility, and a fixed interest rate into an index distribution model.

5. The system as claimed in Claim 4 wherein the expected index is calculated in advance and stored into an expected index database.

6. The system as claimed in Claim 4 wherein the index distribution model is a Fischer Black/Myron Scholes (B/S) pricing model.

7. The system as claimed in Claim 1 wherein the fixed cost comprises a trading cost of the investment quality to multiply the price of the candidate option commodity and a processing fee charged by a trading firm.

8. A method for option commodity recommendation, comprising the steps of:

   receiving an investment purse, an investment direction, and a predicted stock trend;

selecting a plurality of candidate option commodities according to the investment direction and the predicted stock trend, wherein each candidate option commodity has a price and a strike price;
for each candidate option commodity,

calculating an investment quality according to the investment purse and the price thereof;
calculating a profit index under a win probability according to the strike price thereof;
calculating ,a predicted net profit according to the profit index and the investment quality; and
calculating a return thereof under the win probability according to the investment purse, the predicted net profit, and a fixed cost; and

selecting the candidate option commodity with the highest return as a recommendation option commodity under the win probability.

9. The method as claimed in Claim 8 wherein the investment purse, the investment direction, and the predicted stock trend are received via a network interface.

10. The method as claimed in Claim 8 further displaying the recommendation option commodity in a network interface.

11. The method as claimed in Claim 8 wherein the price and the strike price of the candidate option commodity are provided by an option trade unit.

12. The method as claimed in Claim 8 wherein the method for calculating the profit index comprises the steps of:

acquiring an expected index corresponding to the win probability; and
calculating the profit index according to the strike price thereof and the expected index.

13. The method as claimed in Claim 12 wherein the expected index is obtained by inputting the strike price, the win probability, a current index, a risk-free interest rate, a maturity, a volatility, and a fixed interest rate into an index distribution model.

14. The method as claimed in Claim 13 wherein the expected index is calculated in advance and stored into an expected index database.

15. The method as claimed in Claim 13 wherein the index distribution model is a Fischer Black/Myron Scholes (B/S) pricing model. ,

16. The method as claimed in Claim 8 wherein the fixed cost comprises a trading cost of the investment quality to multiply the price of the candidate option commodity and a processing fee charged by a trading firm.

FIG. 1

—200

## 1.Select target and term

211— | TIO ▽ |

212— ○ This term (9/19)

213— ○ Next term (10/17)

—210

## 2.Input investment purse

Remaining sum: ☐ —221

222— ○ Select money
Purse? | ▽ | —223

224— ○ Input money ☐ —225

—220

## 3.Predicted stock trend

231—○ Drop    232—○ No comment    233—○ Rise

—230

## 4.Recommendation

| Real-time Return Display | —241

—240

# FIG. 2

B/S Pricing Model

$\overline{300}$

FIG. 3

START

Receiving investment purse, investment direction, and Predicted stock trend — S40

Selecting candidate option commodities — S41

Return for all candidate option commodities are obtained? — S42

Yes

No

Calculating investment quality according to investment purse and price — S43

Calculating profit index under a win probability according to strike price — S44

Calculating predicted net profit according to profit index and investment quality — S45

Calculating return under the win probability according to investment purse, profit money, and fixed cost — S46

Selecting candidate option commodity with highest return as recommendation option commodity — S47

END

FIG. 4

200

### 1. Select target and term

| TIO ▽ | 212 ○ This term (9/19) |
|---|---|
| 211 | 213 ⊛ Next term (10/17) |

210

### 2. Input investment purse

Remaining sum:  $9,135,583 — 221

222 ⊛  Purse?  Select money  100,000 ▽ — 223

224 ○  Input money  _____ — 225

220

### 3. Predicted stock trend

231 ○ Drop    232 ○ No comment    233 ⊛ Rise

230

### 4. Recommendation

Real-time Return Display — 241

| | | Return | Win Prob. | Repay Prob. |
|---|---|---|---|---|
| Product Detail | 1st Reward | 1:16.04 | 1% | 12.84% |
| Product Detail | 2nd Reward | 1:6.87 | 5% | 16.58% |
| Product Detail | 3rd Reward | 1:3.55 | 10% | 29.15% |
| Product Detail | 4th Reward | 1:2.75 | 15% | 33.93% |
| Product Detail | 5th Reward | 1:2.08 | 20% | 33.93% |
| Product Detail | 6th Reward | 1:1.58 | 25% | 33.93% |

242 243 244 245 246 247 248    240

## FIG. 5

**European Patent Office**

**DECLARATION**

which under Rule 45 of the European Patent Convention shall be considered, for the purposes of subsequent proceedings, as the European search report

**Application Number**

EP 02 02 2376

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

| Place of search | Date | Examiner |
|---|---|---|
| THE HAGUE | 25 February 2003 | Lutz, A |

EPO FORM 1504 (P04C37)